(19) Europäisches Patentamt
European Patent Office
Office européen des brevets

(11) EP 0 893 477 A2

(12) **EUROPÄISCHE PATENTANMELDUNG**

(43) Veröffentlichungstag:
**27.01.1999 Patentblatt 1999/04**

(51) Int. Cl.[6]: **C08L 71/00**, C08L 81/06, C08L 67/02, C08G 65/40

(21) Anmeldenummer: **98111500.9**

(22) Anmeldetag: **23.06.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.07.1997 DE 19731762**

(71) Anmelder:
**BASF AKTIENGESELLSCHAFT**
**67056 Ludwigshafen (DE)**

(72) Erfinder:
- **Weber, Martin, Dr.**
  **67487 Maikammer (DE)**
- **Elbl-Weiser, Karin, Dr.**
  **69198 Schriesheim (DE)**

(54) **Thermoplastische Formmassen mit verbesserter Chemikalienresistenz**

(57) Die Erfindung betrifft thermoplastische Formmassen, enthaltend

A) wenigstens einen Polyarylenether und

B) wenigstens einen thermoplastischen Polyester,
dadurch gekennzeichnet, daß die Formmasse eine die Verträglichkeit der Komponenten A) und B) erhöhende Menge von

C) wenigstens einem Carboxylgruppen aufweisenden, modifizierten Polyarylenether mit wiederkehrenden Einheiten der Formeln I und II

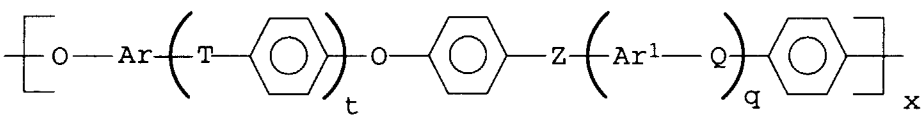
(I)

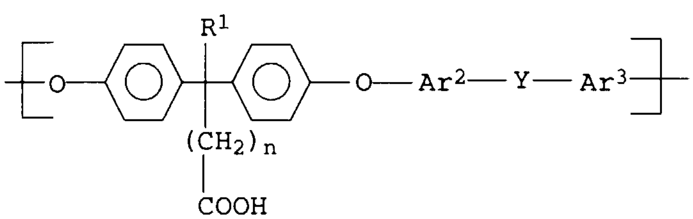
(II)

umfaßt,
worin

x für 0,5 oder 1 steht,

t und q unabhängig voneinander für 0, 1, 2 oder 3 stehen,

n für eine ganze Zahl von 0 bis 6 steht,

Q, T, Y und Z unabhängig voneinander jeweils eine chemische Bindung oder eine Gruppe, ausgewählt unter -

EP 0 893 477 A2

O-, -S-, $-SO_2-$, S=O, C=O, -N=N-, $-R^aC=CR^b-$ und $-CR^cR^d-$, bedeuten, wobei

$R^a$, $R^b$, $R^c$ und $R^d$ verschiedene Bedeutungen besitzen, mit der Maßgabe, daß mindestens eine der Gruppen T, Q und Z für $-SO_2-$ oder C=O steht und, wenn t und q für 0 stehen, Z für $-SO_2-$ oder C=O steht,

Ar, $Ar^1$, $Ar^2$ und $Ar^3$ unabhängig voneinander für $C_6$-$C_{18}$-Arylen-gruppen stehen, wobei diese gegebenenfalls mit $C_1$-$C_{12}$-Alkyl-, $C_6$-$C_{18}$-Aryl-, $C_1$-$C_{12}$-Alkoxygruppen oder Halogenatomen substituiert sind,

$R^1$ für H, $C_1$-$C_6$-Alkyl, oder $-(CH_2)_n$-COOH steht; und
wobei das molare Verhältnis von Einheiten der Formel I zu Einheiten der Formel II im Bereich von 0,05:99,95 bis 99,95:0,05 liegt,

deren Verwendung zur Herstellung von Fasern, Filmen und Formkörpern, sowie die damit hergestellten Fasern, Filme und Formkörper.

## Beschreibung

Die vorliegende Erfindung betrifft thermoplastische Formmassen, die

A) wenigstens einen Polyarylenether und

B) wenigstens einen thermoplastischen Polyester, enthalten und
dadurch charakterisiert sind, daß die Formmasse eine die Verträglichkeit der Komponenten A) und B) erhöhende Menge von

C) wenigstens einem Carboxylgruppen aufweisenden, modifizierten Polyarylenether mit wiederkehrenden Einheiten der Formeln I und II

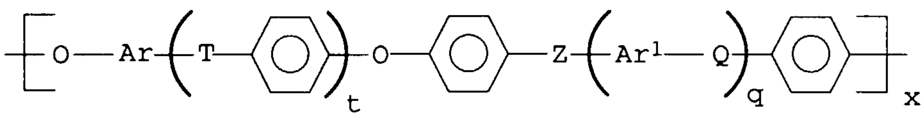

(I)

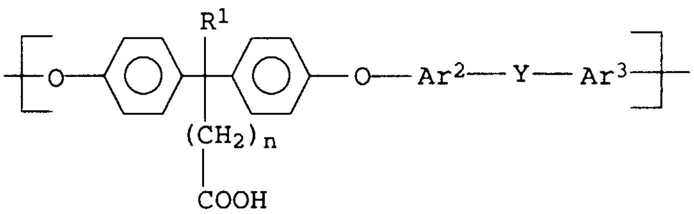

(II)

umfaßt,
worin

x für 0,5 oder 1 steht,

t und q unabhängig voneinander für 0, 1, 2 oder 3 stehen,

n für eine ganze Zahl von 0 bis 6 steht,

Q, T, Y und Z unabhängig voneinander jeweils eine chemische Bindung oder eine Gruppe, ausgewählt unter -O-, -S-, $-SO_2-$, S=O, C=O, -N=N-, $-R^aC=CR^b-$ und $CR^cR^d-$, bedeuten, wobei

$R^a$ und $R^b$ unabhängig voneinander jeweils für ein Wasserstoffatom oder eine $C_1$-$C_{12}$-Alkylgruppe stehen und
$R^c$ und $R^d$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, wobei $R^c$ und $R^d$ gewünschtenfalls unabhängig voneinander mit Fluor- und/oder Chloratomen substituiert sind oder gewünschtenfalls zusammen mit dem C-Atom an das sie gebunden sind, eine $C_3$-$C_{12}$-Cycloalkylgruppe bilden, die gewünschtenfalls mit einer oder mehreren $C_1$-$C_6$-Alkylgruppen substituiert ist,
mit der Maßgabe, daß mindestens eine der Gruppen T, Q und Z für $-SO_2-$ oder C=O steht und, wenn t und q für 0 stehen, Z für $-SO_2-$ oder C=O steht,

Ar, $Ar^1$, $Ar^2$ und $Ar^3$ unabhängig voneinander für $C_6$-$C_{18}$-Arylengruppen stehen, wobei diese gewünschtenfalls mit $C_1$-$C_{12}$-Alkyl-, $C_6$-$C_{18}$-Aryl-, $C_1$-$C_{12}$-Alkoxygruppen oder Halogenatomen substituiert sind,

$R^1$ für H, $C_1$-$C_6$-Alkyl, oder $-(CH_2)_n-COOH$ steht; und
wobei das molare Verhältnis von Einheiten der Formel I zu Einheiten der Formel II im Bereich von 0,05:99,95 bis 99,95:0,05 liegt.

Darüberhinaus betrifft die vorliegende Erfindung die Verwendung der Formmassen zur Herstellung von Formkörpern, Fasern oder Folien sowie die Formkörper, Fasern oder Folien, die aus den Formmassen hergestellt wurden.

Mischungen, die Polyarylenethersulfone und Polyester enthalten, sind beispielsweise aus DE-A 20 46 963, US 4,985,293 oder EP-A 36 954 bekannt. Die Blends sind fließfähiger und beständiger gegenüber Chemikalien als die Polyarylenethersulfone. Sie lassen sich daher besser verarbeiten und die Oberfläche von Füllstoff enthaltenden Mischungen ist weniger rauh als die füllstoffhaltiger Polyarylenethersulfone.

In der EP-A 35 796 werden Massen für die Herstellung von Fasern offenbart, die neben Polyestern Polyarylenethersulfone enthalten können. Gemäß dieser Veröffentlichung verbessert die Zugabe von Polyarylenethersulfonen in Mengen von nicht mehr als 15 Gew.-% die mechanische Stärke der Polyester. Aufgrund der Unverträglichkeit der beiden Mischungsbestandteile entstehen an deren Phasengrenzen Hohlräume, sodaß sich die Mischung besser einfärben läßt als die Polyestermatrix.

Die mechanischen Eigenschaften von Mischungen aus Polyarylenthersulfonen und Polyestern lassen sich gemäß der EP-A 37 547 oder 133 907 dadurch verbessern, daß Polycarbonat mitverwendet wird, da dieses verträglichkeitsvermittelnd wirkt. Aus der EP-A 376 006 und der WO 88/07065 war bekannt, daß bestimmte Kautschuke als Verträglichkeitsvermittler in Blends aus Polyarylenethersulfonen und Polyestern eingesetzt werden können, wodurch sich deren mechanische Eigenschaften verbessern.

Die EP-A 185 237 beschreibt thermoplastische Formmassen auf Basis von Polyamid und Polyarylenethersulfon mit guten mechanischen Eigenschaften, wobei die Polyarylenethersulfonkomponente unter anderem mit Carboxylgruppen modifiziert sein kann. Zur Einführung einer Carboxylgruppe kann z.B. Bis-4,4-(hydroxyphenyl)valeriansäure einpolymerisiert werden.

In den nicht vorveröffentlichten Anmeldungen DE-P 197 02 590.0, 197 02 587.0 und 197 02 5288.9 werden Mischungen beschrieben, die neben Polyarylenethersulfon und Carboxylgruppen enthaltenden Polyarylenenthersulfon als weitere Komponente Füllstoffe, Polyarylensulfid oder einen funktionalisierten Polyolefinkautschuk aufweisen.

Die bislang veröffentlichten Arbeiten auf dem Gebiet der Polyarylenethersulfon/Polyester-Blends beschäftigen sich vornehmlich mit der Bereitstellung von Formmassen für kleinteilige Formkörper wie Platinenenplatten oder elektrische Steckverbindungen. Dies ist vor allem auf das bislang immer noch nicht zufriedenstellend gelöste Problem der Unverträglichkeit der Mischungsbestandteile zurückzuführen.

Es war eine Aufgabe der vorliegenden Erfindung eine möglichst kompatible Mischung zu finden, die Polyarylenethersulfone und Polyester enthält. Eine weitere Aufgabe der vorliegenden Erfindung bestand darin, Formmassen auf der Basis von Polyarylenethern und Polyestern zur Verfügung zu stellen, die sich für die Herstellung großflächiger Formkörper eignen. Insbesondere sollten sich die Formmassen für die Herstellung von Karosserieteilen eignen. Daher bestand die Aufgabe Formmassen mit gegenüber dem Stand der Technik verbesserter Zähigkeit und Festigkeit zur Verfügung zu stellen. Weiterhin sollten Formmassen mit besonders niedriger thermischer Ausdehnung, insbesondere Längenausdehnung, guter Schädigungsarbeit und ausgezeichneter Verarbeitungsbeständigkeit bereit gestellt werden. Bei der Automobilfertigung besteht Bedarf an Zulieferteilen, die sich getrennt von anderen Teilen auf die gleiche Farbe lakkieren lassen. Für dieses sogenannte Offline-Lackierverfahren sollten daher geeignete Formmassen gefunden werden. Beim Lackiervorgang wird das Material mit farblosen oder farbigen Filmen überzogen. Die meisten bekannten Materialien verspröden, wenn sie lackiert werden, so daß sie sich auch aus diesem Grund nicht für die Herstellung von Bauteilen eignen, die auch nach dem Lackieren hohen Belastungen Stand halten sollen.

Diese Aufgaben werden von den eingangs definierten Formmassen erfüllt. Die erfindungsgemäßen Formmassen zeichnen sich durch gute Zähigkeiten, hohe Dimensionsstabilität und gute Verarbeitungsbeständigkeit aus.

In den erfindungsgemäß verwendeten funktionalisierten oder nichtfunktionalisierten Polyarylenetherkomponenten mit Einheiten der Formeln I, II und/oder III gelten die folgenden Bedeutungen:

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: $C_1$-$C_6$-Alkylreste, wie Methyl, Ethyl, n-Propyl, i-Propyl, n-Butyl, s-Butyl, 2- oder 3-Methyl-pentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfassen insbesondere $C_3$-$C_{12}$-Cycloalkylreste, wie Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl oder -trimethyl.

Beispiele für erfindungsgemäß brauchbare $C_6$-$C_{18}$-Arylengruppen sind Phenylengruppen, wie 1,2-, 1,3- oder 1,4-Phenylen, Biphenylengruppen, Naphthylengruppen, z.B. 1,6-, 1,7-, 2,6- oder 2,7-Naphthylen, sowie die von Anthracen, Phenanthren oder Naphthacen abgeleiteten Brückengruppen.

## Komponente A

Die erfindungsgemäßen Formmassen enthalten mindestens einen nicht-modifizierten Polyarylenether A), bevorzugt in einem Anteil von 1 bis 98, insbesondere von 3 bis 94,5 Gew.-%.

Erfindungsgemäß als Komponente A brauchbare Polyarylenether sind aufgebaut aus wiederkehrenden Einheiten der Formel III

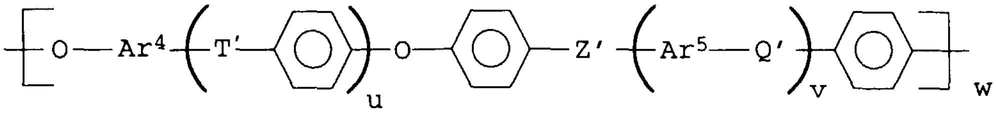
(III)

worin $Ar^4$, $Ar^5$, T', Z', Q', u, v und w unabhängig von Ar, $Ar^1$, T, Z, Q, t, q und x die für diese Reste bzw. Variablen oben angegebenen Bedeutungen haben. Es können auch verschiedene Einheiten der Formel III statistisch oder in Blöcken verteilt im Polyarylenether A) vorliegen.

Die nicht-modifizierten Polyarylenether A) können verschiedenste Endgruppen, z.B. Chlor, Alkoxy, insbesondere Methoxy oder Anhydridendgruppen aufweisen. Vorzugsweise ist der erfindungsgemäß verwendete nicht-modifizierte Polyarylenether A) durch einen Gehalt an OH-Endgruppen gekennzeichnet, der weniger als etwa 0,03 Gew.-%, bezogen auf das zahlenmittlere Molekulargewicht der Polyarylenetherkomponente A, beträgt.

Die Herstellung erfindungsgemäß brauchbarer Polyarylenether A) kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethern sind beispielsweise in EP-A-0 113 112 und EP-A-0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Die darin beschriebene Einführung von terminalen Anhydridgruppen ist für die vorliegende Erfindung jedoch nicht zwingend erforderlich.

Beispiele für geeignete Polyarylenether A) sind solche, mit mindestens einer der folgenden wiederkehrenden Struktureinheiten $III_1$ bis $III_{29}$, wobei die Einheiten $III_6$ bis $III_{29}$ in der Regel zusammen mit mindestens einer der Einheiten $III_1$ bis $III_{15}$ eingesetzt werden:

für w=0,5 in Formel I:

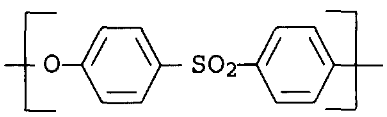
$(III_1)$

für w=1 in Formel III:

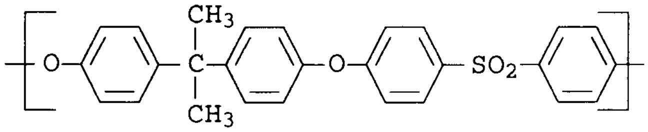

(III$_2$)

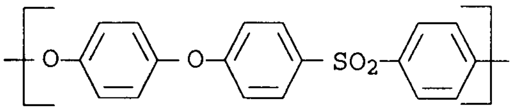

(III$_3$)

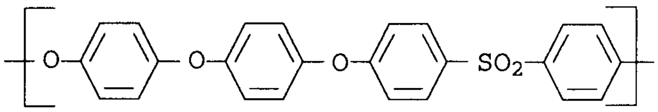

(III$_4$)

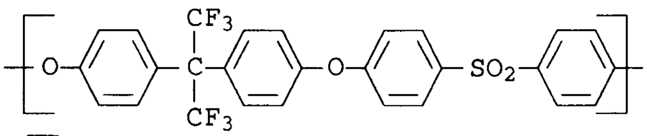

(III$_5$)

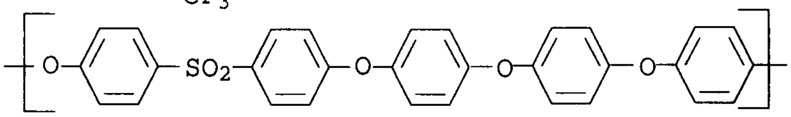

(III$_6$)

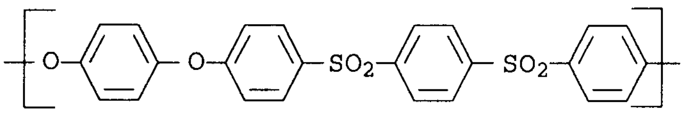

(III$_7$)

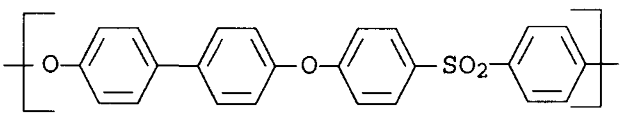

(III$_8$)

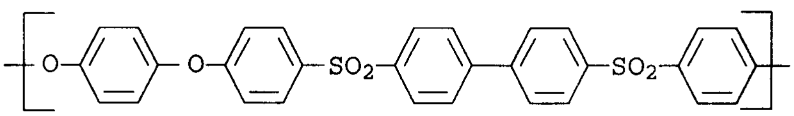

(III$_9$)

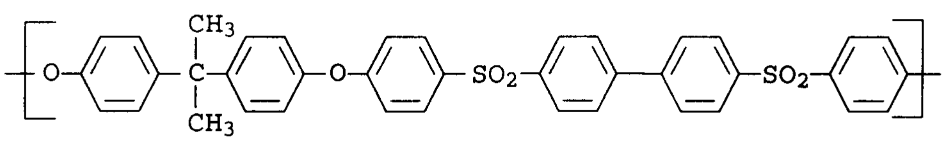

(III$_{10}$)

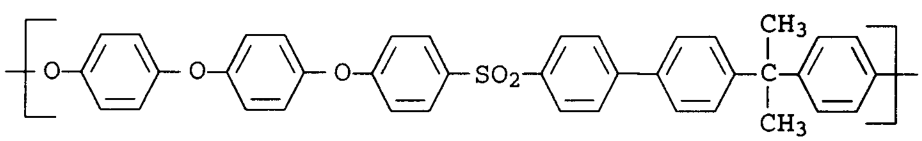

(III$_{11}$)

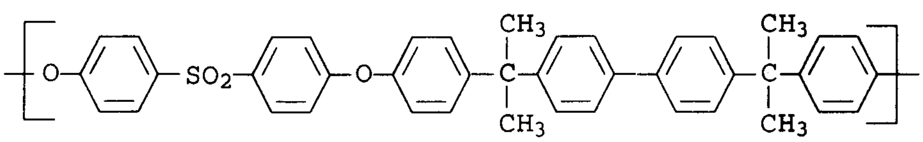

(III$_{12}$)

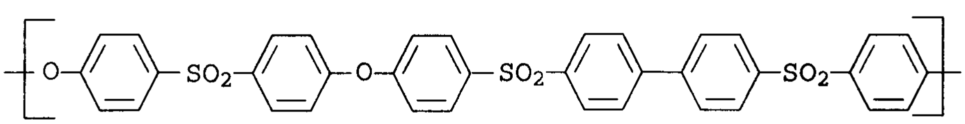

(III$_{13}$)

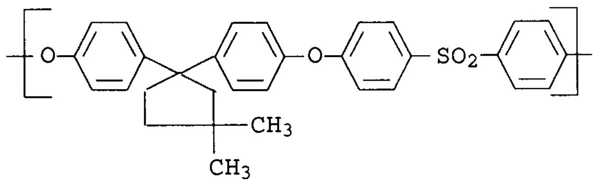
$(III_{14})$

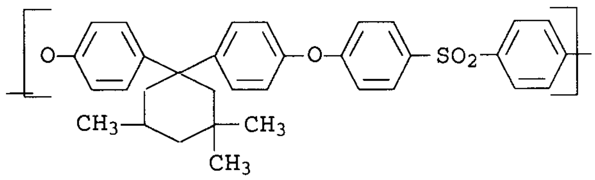
$(III_{15})$

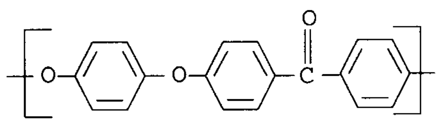
$(III_{16})$

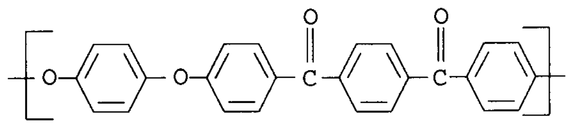
$(III_{17})$

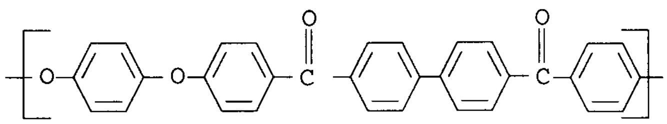
$(III_{18})$

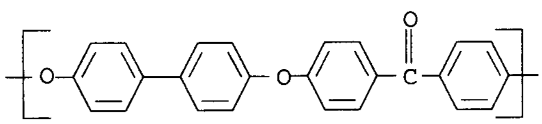
$(III_{19})$

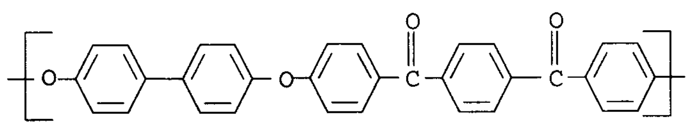
$(III_{20})$

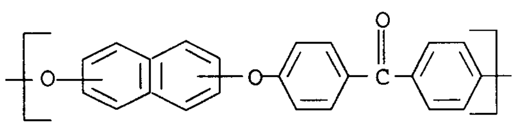
$(III_{21})$

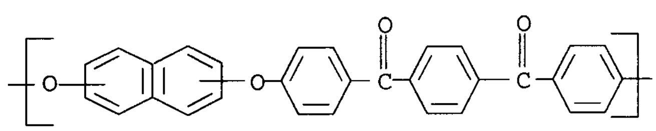
$(III_{22})$

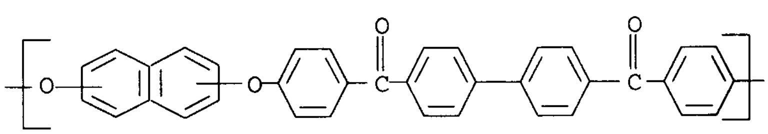
$(III_{23})$

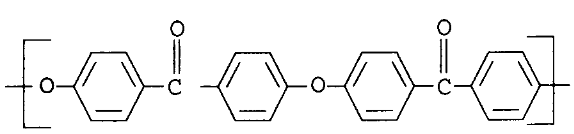
$(III_{24})$

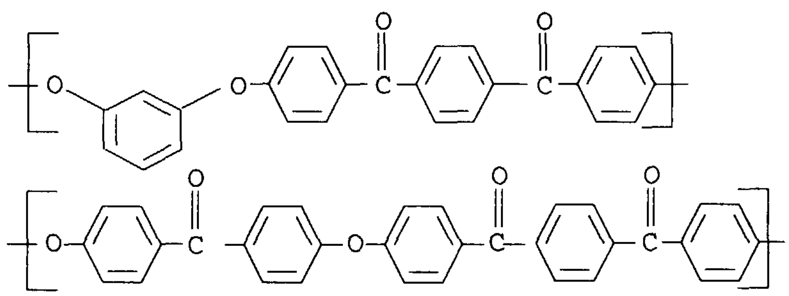

(III25)

(III26)

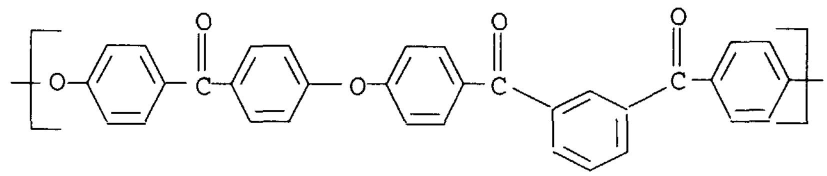

(III27)

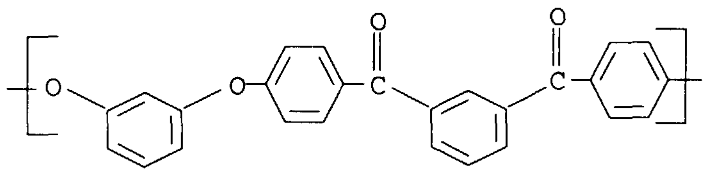

(III28)

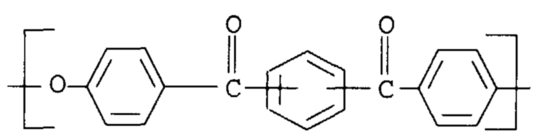

(III29)

Als besonders bevorzugte Einheiten der Formel III sind zu nennen Einheiten der Formeln $III_1$ und $III_2$, welche einzeln oder im Gemisch vorliegen können.

Die Polyarylenether A können auch Co- oder Blockcopolymere sein, in denen Polyarylenethersegmente und Segmente von anderen thermoplastischen Polymeren, wie Polyamiden, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether A mittlere Molekulargewichte $M_n$ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 gew.-%iger Schwefelsäure bei jeweils 20°C bzw. 25°C gemessen.

Komponente B

Der Anteil der Komponente B an den erfindungsgemäßen Formmassen beträgt bevorzugt von 1 bis 98 Gew.-%. Bevorzugt werden insbesondere Formmassen, die von 3 bis 94,5 Gew.-% der Komponente B enthalten.

Die erfindungsgemäßen Formmassen enthalten mindestens einen thermoplastischen Polyester, wobei als Komponente B prinzipiell alle bekannten, linearen oder verzweigten, thermoplastischen Polyester eingesetzt werden können.

Zu den geeigneten Polyestern B) zählen Polyester, die sich von mindestens einem aliphatischen, cycloaliphatischen, aromatischen oder arylaliphatischen Diol oder einer Mischung dieser Diole sowie mindestens einer aromatischen Dicarbonsäure oder ihrer reaktionsfähigen Derivate, wie Dialkylestern, z.B. Dimethylestern oder Anhydriden oder Mischungen dieser Verbindungen ableiten.

Im Allgemeinen weisen die aliphatischen oder cycloaliphatischen Diole von 2 bis 10, bevorzugt von 2 bis 6 Kohlenstoffatome auf. Als aliphatische Diole kommen aber auch Glycole in Betracht, die beispielsweise bis zu 50, bevorzugt

von 2 bis 20 C-Atome haben können. Diese länger-kettigen Diole werden meist in Mischung mit kürzer kettigen Diolen und dort im Allgemeinen als untergeordnete Komponente eingesetzt. Als Beispiele für bevorzugte aliphatische Diole sind 1,2-Dihydroxyethan, 1,4-Dihydroxy-n-butan, Propylenglycol, Diethylenglycol, oder Triethylenglycol zu nennen. Bevorzugtes cycloaliphatisches Diol ist 1,4-Dihydroxycyclohexan.

Die aromatischen oder arylaliphatischen Diole haben in der Regel von 6 bis 20 C-Atome. Bevorzugte aromatische oder arylaliphatische Diole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Weitere bevorzugte Diole sind Hydrochinon oder Resorcin. Besonders bevorzugt sind 2,2-Bis-(4-hydroxyphenyl)-propan und 1,1-Bis-(4-hydroxyphenyl)-cyclohexan sowie 1,1-Bis-(4-hydroxyphenyl)-2,3,5-trimethylcyclohexan sowie 1,1-Bis-(4-hydroxyphenyl)-3,3,5-trimethylcyclohexan.

Zu den bevorzugten aromatischen Dicarbonsäuren zählen $C_8$- bis $C_{20}$-Dicarbonsäuren. Besonders bevorzugt werden Terephthalsäure, Isophthalsäure oder 1,2-Napthalindicarbonsäure oder deren Derivate verwendet.

Thermotrope Polyester, d.h. Polyester, die in einem bestimmten Temperaturbereich flüssigkristalline Eigenschaften aufweisen, können ebenso als Komponente B) eingesetzt werden.

Geeignete thermotrope Polyester haben sich wiederholende Strukturelemente

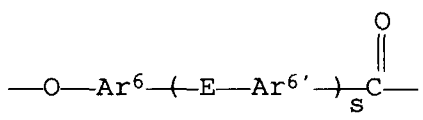 (IV) oder

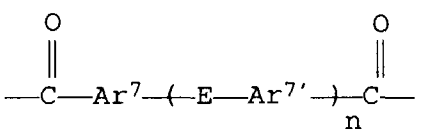 (V) und 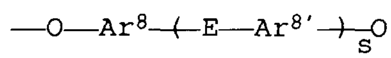 (VI)

oder (IV) und (V) oder (IV) und (VI) oder (IV) und (V) und (VI).

Dabei stehen $Ar^6$, $Ar^{6'}$, $Ar^7$, $Ar^{7'}$, $Ar^8$ und $Ar^{8'}$ jeweils für Arylengruppen, die 6 bis 18 Kohlenstoffatome haben können, wie Phenylen, Naphthylen oder Biphenylen. Die Arylengruppen können unsubstituiert sein oder Substituenten haben. Zu diesen Substituenten zählen $C_1$- bis $C_{12}$-Alkylreste wie oben definiert sowie $C_1$- bis $C_4$-Alkoxygruppen, wie Methoxy, Ethoxy oder n-Butoxy. Daneben können die Substituenten auch Phenylreste oder Halogenatome, insbesondere Chlor sein. Die Variable s kann den Wert 0 oder 1 annehmen und E bedeutet $SO_2$ oder einen 1,4-Benzochinonrest.

Beispielsweise leiten sich derartige thermotrope Polyester ab von einem oder mehreren der folgenden monomeren Bausteine: p-Hydroxybenzoesäure, m-Hydroxybenzoesäure, Terephthalsäure, Isophthalsäure, Hydrochinon, Phenylhydrochinon, alkylsubstituierte Hydrochinone, insbesondere 2-Methylhydrochinon, 2-Ethylhydrochinon, 2-n-Propylhydrochinon, 2-i-Propylhydrochinon, 2-t-Butylhydrochinon, halogensubstituierte Hydrochinone, insbesondere 2-Chlorhydrochinon. Weitere Beispiele geeigneter Monomerer sind 4,4'-Dihydroxydiphenylether, 1,3-Dihydroxybenzol, 4,4'-Biphenol, 2,6,2',6'- Tetramethylbiphenol, 2,6-Dihydroxynaphthalin, 2,7-Dihydroxynaphthalin, 2,6-Naphthalindicarbonsäure, 6-Hydroxy-2-Naphthalincarbonsäure, 4,4'-Bis-(p-hydroxyphenoxy)diphenylsulfon, 2,6-Dihydroxyanthrachinon, 4,4'-Diphenyletherdicarbonsäure oder 4,4'-Dihydroxybenzophenon.

Die geeigneten Polyester B) können in bekannter Weise verzweigt sein, und zwar vorzugsweise durch den Einbau von 0,05 bis 2,0 mol-%, bezogen auf die Summe der eingesetzten Diole, an mindestens trifunktionellen Verbindungen, beispielsweise solchen mit drei oder mehr als drei OH-Gruppen.

Ganz besonders bevorzugt werden als Komponente B) Polyethylenterephthalat, Polybutylenterephthalat, Polyethylennapthalat oder Polybutylennaphthalat oder deren Mischungen eingesetzt.

In der Regel sind die thermoplastischen Polyester charakterisiert durch eine Viskositätszahl im Bereich von 50 bis 170 bevorzugt von 60 bis 160 ml/g (gemessen in 0,5 gew.-%iger Lösung in einem Gemisch aus Phenol und 1,2-Dichlorbenzol im Gew.-Verhältnis 1:1 bei einer Temperatur von 25°C).

Die Herstellung der Polyester B) ist an sich bekannt oder kann nach an sich bekannten Methoden erfolgen. So kann man beipielsweise die Umsetzung eines Dimethylesters mit einem Diol ("Umesterung") bei Temperaturen im Bereich von 160 bis 230°C in der Schmelze bei Atmosphärendruck vorteilhaft unter Inertgasatmosphäre durchführen. Bei der Verwendung von Dicarbonsäuren oder deren Anhydriden kann deren Veresterung mit einem Diol vor, gleichzeitig oder nach der Umesterung stattfinden.

Üblicherweise erfolgt die Herstellung der Polyester B) unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, oder Ca, bevorzugt metallorganische Verbindungen auf der Basis dieser Metalle wie Salze organischer Säuren, Alkoxide oder Acetylacetonate, insbesondere bevorzugt auf Basis von Zink, Zinn oder Titan. Gewünschtenfalls können auch Gemische von Katalysatoren eingesetzt oder verschiedene Katalysatoren zu verschiedenen Zeitpunkten zum Reaktionsmedium gegeben werden.

Nach der Umsetzung wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren zusetzen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul® 2003AO (BASF) erhältlich).

Komponente C

Erfindungsgemäß enthalten die Formmassen die Komponente C) in einer die Verträglichkeit erhöhenden Menge.

Unter verbesserter Verträglichkeit zweier Polymerkomponenten versteht man im allgemeinen, daß sich die Mischbarkeit der Komponenten oder die Neigung des einen Polymeren, sich in der anderen Polymerkomponente zu lösen erhöht (siehe B. Vollmert, Grundriß der makromolekularen Chemie, Band IV, S. 222 ff, E. Vollmert-Verlag 1979) . Dies bedeutet, daß die Morphologie des Systems feinteiliger ist.

Verfahren, die zur Bestimmung der Verträglichkeit von Polymeren herangezogen werden können, sind z.B. Trübungsmessungen oder Streumethoden (Lichtstreuung) (L.A. Utracki "Polymer Alloys and Blends", S. 34-42, Hanser Verlag New York 1989).

Der Anteil der Komponente C) in den bevorzugten erfindungsgemäßen thermoplastischen Formmassen beträgt von 1 bis 50 Gew.-%, insbesondere von 1,5 bis 30 Gew.-%.

Die in den erfindungsgemäßen Formmassen zur Verbesserung der Chemikalienbeständigkeit verwendeten, seitenständig carboxylierten Polyarylenether (Komponente C) sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach beispielsweise erhältlich durch Polykondensation von Verbindungen der allgemeinen Formel VII

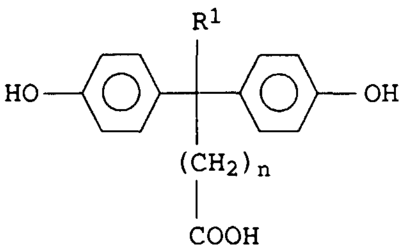

(VII)

worin $R^1$ und n die oben angegebenen Bedeutungen haben mit wenigstens einer weiteren, z.B. chlorfunktionalisierten aromatischen Verbindung, wie Bis-(4-chlorphenyl)sulfon, und gegebenenfalls weiteren hydroxyfunktionalisierten Verbindungen, z.B. Bisphenol A, und/oder Bisphenol S. Geeignete Reaktionspartner sind dem Fachmann allgemein bekannt.

Zur Herstellung der modifizierten Polyarylenether C) können prinzipiell auch die für Polyarylenether A) verwendeten Methoden eingesetzt werden, wobei die Lösungspolymerisation in dipolar aprotischen Lösungsmitteln unter Baseneinwirkung bevorzugt wird.

Obige Ausführungen zu bevorzugten Strukturelementen III für Polyarylenether A) gelten entsprechend für die Strukturelemente I der modifizierten Polyarylenether C).

Beispiele für geeignete Strukturelemente II sind:

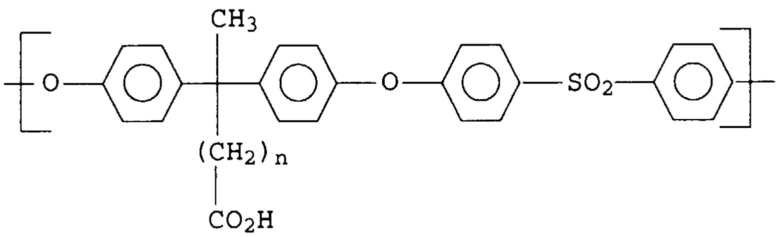

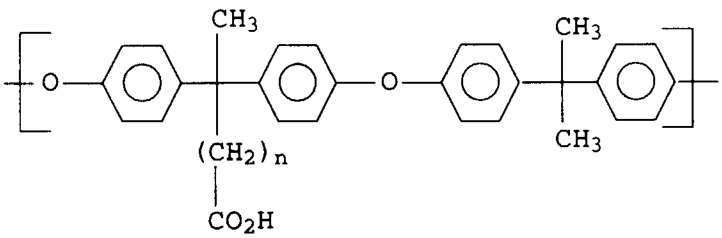

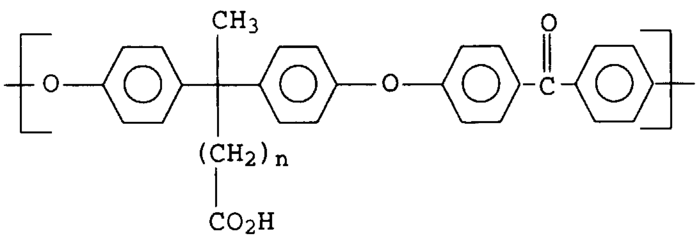

worin n jeweils für eine ganze Zahl von 0 bis 6 steht.

Die erfindungsgemäß verwendeten säuregruppenhaltigen Polyarylenether C) weisen im allgemeinen Viskositätszahlen von 15 bis 80 ml/g auf (bestimmt in 1 %iger NMP-Lösung bei 25°C). Der Anteil freier Säuregruppen enthaltender Einheiten gemäß Formel II in der Komponente C) beträgt bevorzugt von 0,05 bis 25, vorzugsweise von 0,1 bis 20 und insbesondere von 0,1 bis 15 mol-%, wobei die Bestimmung des Anteils an Säuregruppen, wie bei I.W. Parsons et al., Polymer, 34, 2836 (1993) beschrieben, durch $^{1}H$-NMR erfolgt.

Komponente D

Neben den Komponenten A) bis C) können die erfindungsgemäßen Formmassen auch von 0 bis 30, vorzugsweise von 1 bis 25 Gew.-% eines schlagzähmodifizierenden Kautschuks D) enthalten. Es können übliche Schlagzähmodifier verwendet werden, die für Polyarylenether und/oder Polyester geeignet sind.

Als Kautschuke, die die Zähigkeit der Blends erhöhen, seien z.B. folgende genannt:

EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters, wie Cumolhydroperoxid, auf das Polymer aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen oder Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt z.B. im Bereich von 99,95 bis 55 Gew.-%.

Als weitere Gruppe von geeigneten Elastomeren sind Kern-SchalePfropfkautschuke zu nennen. Hierbei handelt es

sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich z.B. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxy-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth)acrylat, Acrylsäure, Glycidyl(meth)acrylat und Vinyloxazolin. Der Anteil an Monomeren mit funktionellen Gruppen beträgt z.B. von 0,1 bis 25 Gew.-%, vorzugsweise von 0,25 bis 15 Gew.-%, bezogen auf das Gesamtgewicht des Kern-Schale-Pfropfkautschuks. Das Gewichtsverhältnis von weichen zu harten Bestandteilen beträgt z.B. von 1:9 bis 9:1, bevorzugt von 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen ableiten und kurzkettige Segmente, die sich von niedermolekularen Diolen und Dicarbonsäuren ableiten, enthalten. Derartige Produkte sind an sich bekannt und in der Literatur, z.B. in der US-A 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

## Komponente E

Als Komponente E) enthalten die erfindungsgemäßen Formmassen faser- oder teilchenförmige Füll- oder Verstärkungsstoffe in einem Anteil von 0 bis 60 Gew.-%, vorzugsweise von 0 bis 30 Gew.-%.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Bevorzugt sind Glycidyl-, Vinyl- oder Aminoalkyltrialkoxysilane. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,05 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit oder 15 Gew.-% Glasfasern mit 15 Gew.-% Wollastonit.

## Komponente F

Neben den beschriebenen Bestandteilen A) bis C) und gewünschtenfalls D) und/oder E) können die erfindungsgemäßen Formmassen als Komponente F) noch von 0 bis 50 Gew.-%, vorzugsweise von 0 bis 30 Gew.-% Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel oder Weichmacher enthalten.

Als Beispiele für Oxidationsverzögerer und Wärmestabilisatoren sind sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als Stabilisatoren können auch Mischungen aus sterisch gehinderten Phenolen und Phosphoniten eingesetzt werden. Darunter sind Stabilisatormischungen, die von 5 bis 95 Gew.-%, insbesondere von 40 bis 60 Gew.-% eines sterisch gehinderten Phenols und von 5 bis 95 Gew.-%, insbesondere von 40 bis 60 Gew.-% eines Phosphonits enthalten, bevorzugt. Im allgemeinen sind derartige Stabilisatormischungen in Anteilen im Bereich von 0,1 bis 10, insbesondere von 0,5 bis 5 Gew.-% in den erfindungsgemäßen Formmassen enthalten.

Geeignete sterisch gehinderte Phenole sind beispielsweise Verbindungen mit ein, zwei, drei oder vier sterisch gehinderten Phenolgruppen, die in der EP 0 038 183 beschrieben sind, worauf hiermit vollinhaltlich Bezug genommen wird. Besonders bevorzugt werden 2,2'-Thio-bis-(4-methyl-6-(1,1-dimethylethyl)-phenol, 3,5-Bis(1,1-dimethylethyl)-4-hydroxybenzyl)-phosphonsäurediethylester sowie Octadecyl-3-(3,5-bis(1,1-dimethylethyl)-4-hydroxyphenyl)-propionat (z.B. Irganox 1076 der Fa. Ciba-Geigy).

Als Phosphonite können organisch substituierte Ester der phosphonigen Säure ($HP(OH)_2$) eingesetzt werden.

Geeignete Phosphonite sind beispielsweise auch in der EP 0 036 278 beschrieben, worauf hiermit vollinhaltlich Bezug genommen wird. Bevorzugt sind Diphosphonite, wie Tetrakis-(2,4-bis-(1,1-dimethylethyl)-phenyl-4,4'-diphenylendi phosphonit verwendet.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 $\mu$m, insbesondere von 0,1 bis 5 $\mu$m auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Als Flammschutzmittel seien organische Chlor- und Bromverbindungen, Erdalkalihydroxide, vorzugsweise mit Synergisten wie phosphororganischen Verbindungen und/oder Antimontrioxid sowie Mischungen von Carbonaten der II. Hauptgruppe und roter Phosphor genannt.

Als Flammschutzmittel können des Weiteren phosphororganische Verbindungen, wie Phosphate oder Phosphinoxide eingesetzt werden.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosphinoxid oder Tris-(cyanoethyl)-phosphinoxid.

Als Phosphate kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis-(2-ethylhexyl)-p-tolyl-phosphat, Tritolylphosphat, Trixylylphosphat,

Trimesitylphosphat, Bis-(2-ethylhexyl)-phenylsphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Darüber hinaus können Mischungen unterschiedlicher Phosphorverbindungen verwendet werden. Bevorzugt werden beispielsweise Mischungen, die aufgebaut sind aus mindestens einem Phosphinoxid $\alpha$), mindestens einem Phosphat ($\beta$), sowie mindestens einer Borverbindung ($\gamma$).

Besonders bevorzugt sind Mischungen aus folgenden Phosphinoxid $\alpha$)- und Phosphat $\beta$)-Kombinationen: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phospinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Unter Borverbindungen $\gamma$) sollen sowohl anorganische als auch organische Borverbindungen verstanden werden.

Beispiele für anorganische Borverbindungen sind Borsäure, $B_2O_3$ und Salze der Borsäure, bevorzugt mit Alkalioder Erdalkalimetallen. Besonders bevorzugt sind Borsäure, Natriumborat oder Boroxid.

Organische Borverbindungen $\gamma$) sind beispielsweise Tetraphenylborate, z.B. Natriumtetraphenylborat und Tribenzylborat.

Darüberhinaus sind phosphororganische Verbindungen der allgemeinen Formeln IX bis XI als Flammschutzmittel geeignet.

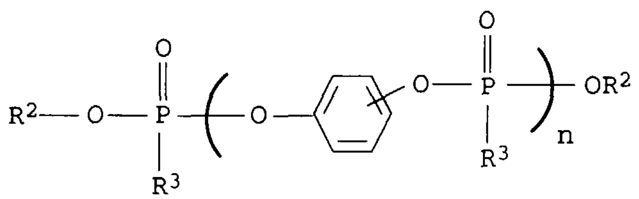

(IX)

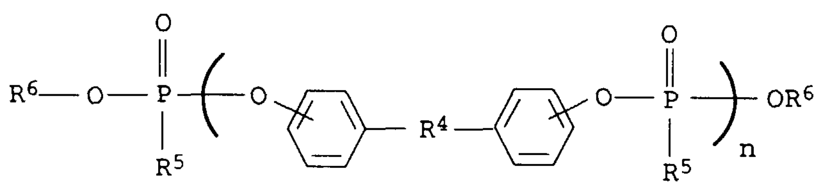

(X)

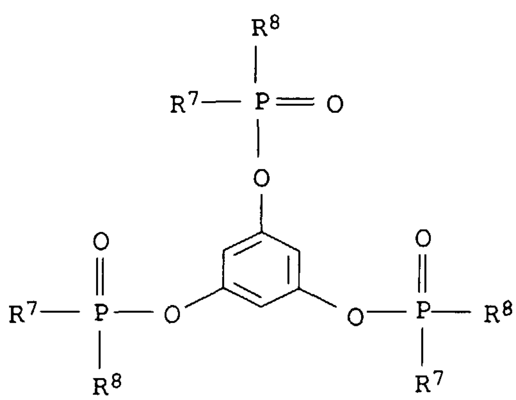

(XI)

wobei $R^2$ und $R^6$ Alkyl- oder Aryl-, $R^3$, $R^5$, $R^7$ und $R^8$ Alkyl-, Aryl-, Alkoxy oder Aryloxy, n und p eine ganze Zahl von 1 bis 30 bedeuten, $R^4$ Alkyl, $-SO_2-$, -CO-, -N=N-, $R^9$-P=O bedeutet, wobei $R^9$ Alkyl-, Aryl- oder Alkylaryl- ist.

Meist werden Mischungen verschiedener Oligomerer oder Isomerer dieser phosphororganischen Verbindungen eingesetzt.

Das Molekulargewicht beträgt im allgemeinen nicht mehr als 1 000, bevorzugt 150 bis 800.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern, vorzugsweise Zweischneckenextrudern, Brabender-Mischer oder Banburry-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder gegebenenfalls drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 min bei Temperaturen von 280 bis 400°C, bevorzugt 290 bis 390°C, erforderlich. Nach der Extrusion wird das Extrudat in der Regel abgekühlt und zerkleinert.

Die erfindungsgemäßen Formmassen zeichnen sich durch sehr gute Schlagzähigkeiten, gute Verarbeitungsstabilitäten sowie günstige Ausdehnungskoeffizienten aus.

Aufgrund der genannten Eigenschaften und der hohen Wärmeformbeständigkeit sind diese Formmassen zur Herstellung von insbesondere großteiligen Formkörpern geeignet, die z.B. im Haushalts-, Elektro- und Medizintechnikbereich sowie besonders bevorzugt im Kraftfahrzeug- und Maschinenbau eingesetzt werden können.

Die Erfindung wird nun anhand folgender nicht-limitierender Ausführungsbeispiele näher erläutert.

Beispiele

Die Viskositätszahl wurde in 1 gew.-%iger Lösung von N-Methylpyrrolidon bei 25°C bestimmt. Der Anteil der Einheiten mit Säuregruppen in den Copolyarylethern $C_1$ und $C_2$ wurde wie bei I.W. Parsons et al., Polymer, 34, 2836 (1993) beschrieben, durch $^1$H-NMR-Spektroskopie ermittelt.

Die Schmelzviskosität wurde in einem Hochdruck-Kapillarviskosimeter (Rheograph 2003 der Firma Göffert) bei einer Schergeschwindigkeit von 55 Hz und 280°C bestimmt.

Die Glasübergangstemperatur wurde mittels Differenzial-Scanning-Kalometrie (DSC 7 der Firma Perkln Elmer) bei einer Aufheizrate von 20 K/min bestimmt.

Komponente $A_1$:

Als Polyarylenether $A_1$ wurde Ultrason® S 1010 (Handelsprodukt der BASF Aktiengesellschaft) verwendet. Dieses Produkt ist charakterisiert durch eine Viskositätszahl von 48 ml/g, gemessen in 1 gew.-%iger NMP-Lösung bei 25°C. Es umfaßt überwiegend Einheiten der Formel $III_2$.

Komponente $B_1$:

Polybutylenterephthalat, charakterisiert durch einen Elastizitätsmodul von 2600 N/mm$^2$ (z.B. Ultradur® B 4500 der BASF Aktiengesellschaft)

Carboxylseitenketten aufweisender Copolyarylether $C_1$

Unter Stickstoffatmosphäre wurden 5,742 kg (20 mol) Dichlordiphenylsulfon, 4,374 kg (19,13 mol) Bisphenol A und 112 g (0,39 mol) 4,4'-Bis-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach Extraktion mit Wasser wurde das Produkt bei 140°C im Vakuum getrocknet. Es wurde ein weißes Pulver erhalten.

Der Anteil an Einheiten mit Säuregruppen wurde mittels $^1$H-NMR zu 1,2 mol-% bestimmt, die Viskositätszahl des Produkts betrug 38,1 ml/g.

Carboxylseitenketten aufweisender Copolyarylether $C_2$

Unter Stickstoffatmosphäre wurden 5,742 kg (20 mol) Dichlordiphenylsulfon, 4,240 kg (18,69 mol) Bisphenol A und 280 g (0,98 mol) 4,4'-Bis-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert Nach Extraktion mit Wasser wurde das Produkt bei 140°C im Vakuum getrocknet. Es wurde ein weißes Pulver erhalten.

Der Anteil an Einheiten mit Säuregruppen wurde mittels $^1H$-NMR zu 3,1 mol-% bestimmt, die Viskositätszahl des Produkts betrug 37,1 ml/g.

Schlagzähmodifizierender Kautschuk $D_1$

Ethylen-Methylmethacrylat-Glycidylmethacrylat-Polymer mit 25 Gew.-% Methylmethacrylat und 8 Gew.-% Glycidylmethacrylat, charakterisiert durch einen Schmelzindex (190°C, 2,16 kg) von 6 g/10 min (z.B. Lotader® AX 8900 der Firma Elf-Atochem).

Schlagzähmodifizierender Kautschuk $D_2$

Methylmethacrylat/Butadien/Styrol-Pfropfcopolymer, charakterisiert durch einen Kautschukkern auf der Basis von 82,5 Gew.-% Butadien und 17,5 Gew.-% Styrol mit einer Glasübergangstemperatur von 79°C und einer Propfhülle auf der Basis von Polymethylmethacrylat (z.B. Paraloid® EXL 3600 der Firma Rohm & Haas).

Komponente $E_1$:

Talk (z.B. IT-Extra® der Firma Norwegian Talc)

Anwendungsbeispiel:

Herstellung und Prüfung der Formmassen

Unter Verwendung der genannten Komponenten wurden erfindungsgemäß Formmassen 1 bis 6 und Vergleichsformmassen V1 bis V5 hergestellt und auf ihre Eigenschaften getestet.

Die Komponenten wurden in einem Zweiwellenextruder bei einer Massetemperatur von 300 bis 350°C gemischt. Die Schmelze wurde durch ein Wasserbad geleitet und granuliert.

Die Formmassen wurden bei einer Massetemperatur von 310°C verarbeitet. Die Formtemperatur war jeweils 100°C.

Zum Vergleich wurde ein Polycarbonat (PC), charakterisiert durch eine Viskositätszahl von 61,4 ml/g (gemessen in einer 0,5 gew.-%igen Lösung im Dichlormethan bei 25°C) anstelle der Komponente C eingesetzt.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Schädigungsarbeit ($W_s$[Nm]) wurde an Rundschreiben nach DIN 53 443 ermittelt.

Die Kerbschlagzähigkeit ($a_k$[kJ/m$^2$]) wurde nach ISO 179 1eA bestimmt.

Der thermische Ausdehnungskoeffizient (CTE) wurde nach DIN 53 752A ermittelt, wobei in der Tabelle, die bei 25°C in Längsrichtung gemessenen Werte angegeben sind.

Die Verarbeitungsstabilität wurde anhand der Viskositätsänderung der Schmelze, die bei einer Verweilzeit von 20 Minuten bei 280°C auftritt beurteilt ($\Delta = (\eta_0 - \eta_{20})/\eta_0$ [%]).

Die Zusammensetzungen der Formmassen und die Ergebnisse der Prüfungen sind in Tabelle 1 aufgeführt.

Tabelle 1

| Formmasse Nr. | V1 | 1 | 2 | V2 | 3 | 4 | V3 | 5 | V4 | 6 | V5 |
|---|---|---|---|---|---|---|---|---|---|---|---|
| Komponente [Gew.-%] | | | | | | | | | | | |
| $A_1$ | 70 | 65 | 65 | 63 | 58 | 58 | 18 | 13 | 16 | 11 | 14 |
| $C_1$ | - | 5 | - | - | 5 | - | - | - | - | - | - |
| $C_2$ | - | - | 5 | - | - | 5 | - | 5 | - | 5 | - |
| $B_1$ | 30 | 30 | 30 | 27 | 27 | 27 | 72 | 72 | 64 | 64 | 56 |
| $D_1$ | - | - | - | - | - | - | 10 | 10 | 10 | 10 | 10 |
| $D_2$ | - | - | - | 10 | 10 | 10 | - | - | - | - | - |
| E | - | - | - | - | - | - | - | - | 10 | 10 | 10 |
| PC | - | - | - | - | - | - | - | - | - | - | 10 |
| Vicat B [°C] | 180 | 179 | 179 | 168 | 168 | 169 | 156 | 155 | 168 | 167 | 134 |
| $a_k$ [kJ/m²] | 1,7 | 3,9 | 4,8 | 11,2 | 32,1 | 41,1 | 12,3 | 41,1 | 8,1 | 12,1 | 16,1 |
| $W_s$ [Nm] | 2,1 | 24,1 | 31,4 | 13,2 | 46,1 | 50,3 | 13,7 | 56,2 | 12,1 | 51,3 | 18,1 |
| CTE [$10^{-6}K^{-1}$] | 86 | 85 | 86 | 94 | 95 | 95 | 99 | 99 | 71 | 70 | 74 |
| Δ [%] | 50 | 36 | 32 | 45 | 27 | 21 | 59 | 31 | 54 | 21 | 71 |

V1 - V4: Vergleichsversuche

Wie die Versuche belegen, wird die Verträglichkeit zwischen Polyarylethern und Polyester durch Zugabe der reaktiven Polyarylether signifikant verbessert. Dies gilt auch für die zähmodifizierten bzw. gefüllten Produkte. Gegenüber

dem Stand der Technik, PC als Verträglichkeitsvermittler einzusetzen, sind erhebliche Vorteile erkennbar.

## Patentansprüche

1. Thermoplastische Formmassen, enthaltend

   A) wenigstens einen Polyarylenether und

   B) wenigstens einen thermoplastischen Polyester, dadurch gekennzeichnet, daß die Formmasse eine die Verträglichkeit der Komponenten A) und B) erhöhende Menge von

   C) wenigstens einem Carboxylgruppen aufweisenden, modifizierten Polyarylenether mit wiederkehrenden Einheiten der Formeln I und II

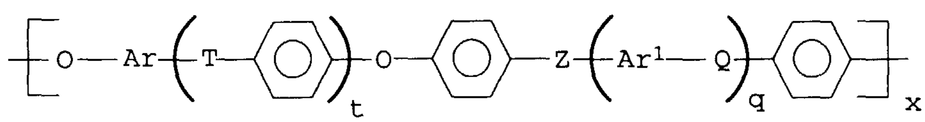

(I)

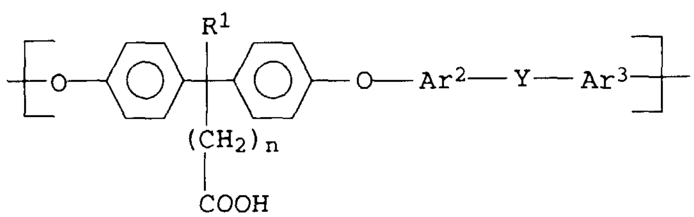

(II)

   umfaßt, worin

   x für 0,5 oder 1 steht,

   t und q unabhängig voneinander für 0, 1, 2 oder 3 stehen,

   n für eine ganze Zahl von 0 bis 6 steht,

   Q, T, Y und Z unabhängig voneinander jeweils eine chemische Bindung oder eine Gruppe, ausgewählt unter -O-, -S-, $-SO_2-$, S=O, C=O, -N=N-, $-R^aC=CR^b-$und $-CR^cR^d-$, bedeuten, wobei

   $R^a$ und $R^b$ unabhängig voneinander jeweils für ein Wasserstoffatom oder eine $C_1$-$C_{12}$-Alkylgruppe stehen und

   $R^c$ und $R^d$ unabhängig voneinander jeweils für ein Wasserstoffatom oder eine $C_1$-$C_{12}$-Alkyl-, $C_1$-$C_{12}$-Alkoxy-oder $C_6$-$C_{18}$-Arylgruppe stehen, wobei $R^c$ und $R^d$ gewünschtenfalls unabhängig voneinander mit Fluor- und/oder Chloratomen substituiert sind oder gewünschtenfalls zusammen mit dem C-Atom an das sie gebunden sind, eine $C_3$-$C_{12}$-Cycloalkylgruppe bilden, die gewünschtenfalls mit einer oder mehreren $C_1$-$C_6$-Alkylgruppen substituiert ist, mit der Maßgabe, daß mindestens eine der Gruppen T, Q und Z für $-SO_2-$ oder C=O steht und, wenn t und q für 0 stehen, Z für $-SO_2-$ oder C=O steht,

   Ar, $Ar^1$, $Ar^2$ und $Ar^3$ unabhängig voneinander für $C_6$-$C_{18}$-Arylengruppen stehen, wobei diese gewünschten-falls mit $C_1$-$C_{12}$-Alkyl-, $C_6$-$C_{18}$-Aryl-, $C_1$-$C_{12}$-Alkoxygruppen oder Halogenatomen substituiert sind,

   $R^1$ für H, $C_1$-$C_6$-Alkyl, oder $-(CH_2)_n$-COOH steht; und wobei das molare Verhältnis von Einheiten der Formel I zu Einheiten der Formel II im Bereich von 0,05:99,95 bis 99,95:0,05 liegt.

2. Formmasse nach Anspruch 1, dadurch gekennzeichnet, daß der modifizierte Polyarylenether C) einen Anteil freie Säuregruppen enthaltende Einheiten der Formel II von 0,05 bis 25 mol-%, bestimmt durch $^1$H-NMR, aufweist.

3. Formmasse nach einem der vorherigen Ansprüche, dadurch gekennzeichnet, daß der modifizierte Polyarylenether C) Strukturelemente der Formel II umfaßt, worin $Ar^2$ und $Ar^3$ jeweils für 1,4-Phenylen, Y für $SO_2$, $R^1$ für $C_1$-$C_6$-Alkyl und n für eine ganze Zahl von 1 bis 6 steht.

4. Formmasse nach einem der vorherigen Ansprüche, dadurch gekennzeichnet, daß der Polyarylenether A) aus wiederkehrenden Strukturelementen der Formel III

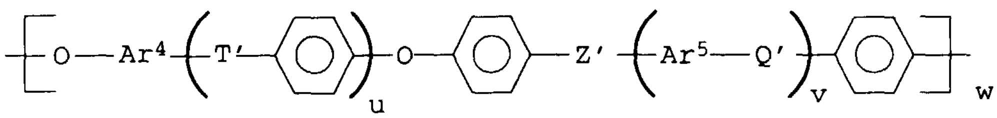
(III)

aufgebaut ist, wobei $Ar^4$, $Ar^5$, T', Q', Z', u, v und w unabhängig von Ar, $Ar^1$, T, Z, Q, t, q und x die für diese Reste und Variablen oben angegebenen Bedeutungen haben.

5. Formmasse nach einem der vorherigen Ansprüche, dadurch gekennzeichnet, daß die Einheiten der Formel I in den Komponenten A) und C) unabhängig voneinander ausgewählt sind unter Einheiten der Formel

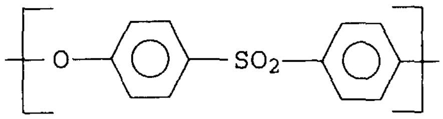

und

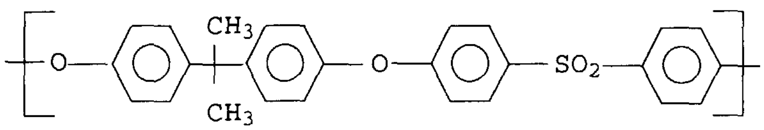

oder Gemischen davon.

6. Formmasse nach Anspruch 5, dadurch gekennzeichnet, daß der Polyarylenether A) einen Gehalt an HO-Endgruppen von weniger als 0,03 Gew.-%, bezogen auf das zahlenmittlere Molekulargewicht des Polyarylenethers, aufweist.

7. Formmasse nach einem der vorherigen Ansprüche, dadurch gekennzeichnet, daß der thermoplastische Polyester B) ein Alkylenterephthalat ist.

8. Formmasse nach einem der vorherigen Ansprüche, enthaltend, jeweils bezogen auf das Gesamtgewicht der thermoplastischen Formmasse

A) 1 bis 98 Gew.-% wenigstens eines Polyarylenethers,

B) 1 bis 98 Gew.-% wenigstens eines thermoplastischen Polyesters,

C) 1 bis 50 Gew. -% wenigstens eines Polyarylenethers mit Carboxylgruppen,

D) 0 bis 60 Gew.-% wenigstens eines faser- oder teilchenförmigen Füllstoffs oder deren Mischungen,

E) 0 bis 30 Gew.-% wenigstens eines schlagzähmodifizierenden Kautschuks, und

F) 0 bis 50 Gew.-% wenigstens eines üblichen Zusatzes.

9. Verwendung von Formmassen nach einem der vorherigen Ansprüche zur Herstellung von Formkörpern, Folien oder Fasern.

10. Formkörper, Folien oder Fasern hergestellt unter Verwendung einer Formmasse gemäß einem der Ansprüche 1 bis 8.

11. Formkörper nach Anspruch 10, der ein Kraftfahrzeugbauteil ist.